# EUROPEAN PATENT APPLICATION

(11) **EP 4 841 430 A1**
(43) Date of publication of application: **18.11.2026**
(21) Application number: 26175588.8
(22) Date of filing: 29.04.2026
(51) Int. Cl.: G06F 8/41

(54) **METHOD OF COMPILING A COMPUTER PROGRAM**

(30) Priority: 16.06.2025 GB 202509476
(71) Applicant: Fotonation Limited, County Galway H91D1KH (IE)
(72) Inventor: Drimbarean, Alexandru, Claregalway, H91D1KH (IE); Galmeanu, Honorius, N/A Brasov (RO)
(74) Representative: Boyce, Conor

(57) **Abstract**

A method of compiling a computer program comprises analysing source code for a program to identify one or more function calls for a parametric function; and for a first instance of a given parametric function call with a given set of parameter values, executing an associated generator for producing look-up table data for the combination of function and parameter values and at least temporarily storing the look-up table data. When a code generator identifies a function call for a parametric function with a given set of parameter values, stored look-up table data for the parametric function and parameter values are retrieved and the look-up table data is employed in compiled code for the program in order to execute a look-up table approximation of the function at program run-time.

## Description

### Field

The present invention relates to a method of compiling a computer program.

### Background

There are many examples of computer programs using look-up tables (LUTs) for executing functions on processing platforms, for example, where the processing platform either does not have a dedicated command for the function or where such a command might require multiple processor instructions to otherwise execute the function. So, for example, where speed is more important than precision, it can be useful to employ a look-up table.

In many cases, functions are non-parametric, i.e. *y=f(x),* where *x* is a function input and *y* the output, for example, trigonometric functions.

Neural networks are typically modelled as a network of layers, for example, simple layers such as convolution or pooling or more complex layers such as LSTM or Attention. One common layer is an activation function, and a well-known non-parametric activation function is sigmoid, defined as: $σ \left(x\right) = \frac{1}{1 + {e}^{- x}}$

This activation function has no parameters, therefore its LUT approximation can be computed in advance and stored so that it is accessible to a compiler for use in generating code for executing the network. Other examples of non-parametric activation functions include: Relu, Tanh, Softsign and Softplus.

Examples of compiler/processing systems include: the Hailo-8 edge AI processor with its Toolchain compiler, see hailo.ai, as well as the MemryX MX3 AI accelerator and its neural compiler.

These compilers typically parse neural network models defined using the ONNX (onnx.ai) standard to produce executable code for their respective processing platforms.

During compilation, every time such a compiler encounters an activation function with an LUT approximation, it will employ the LUT within the compiled code. Such an approach is described in "Generative AI in C++", David Spuler, Ph.D., Chapter 35, "Lookup Tables & Precomputation", ISBN 979-8871928684, April 2024.

A challenging situation occurs where a function has parameters that can vary from one program instance to another or even where different instances of the function have different parameters within the same program. An example is ELU (Exponential Linear Unit) defined as: $ELU \left(x, α\right) = \left\{\begin{matrix}x if x > 0 \\ α ⋅ \left({e}^{x}-1\right) if x \leq 0\end{matrix}\right.$

Other examples of parameterized functions include:
- $Affine \left(x, α, β\right) = α * x + β$
- $LeakyRelu \left(x, α\right) = x if x > = 0 else α * x$
- $ThresholdedRelu \left(x, α\right) = x if x > = α else 0$
- $ScaledTanh \left(x, α,β\right) = α * Tanh \left(β*x\right)$
- $HardSigmoid \left(x, α,β\right) = min \left(max\left(α*x+β,0\right),1\right)$
where *α* and *β* for a particular layer of a neural network are typically determined during training of the neural network.

As parameters determined during training of the neural network can have different values, it is impractical to employ the LUT approximation as described above, because a very large number of LUTs, i.e. one for each potential parameter value or combination of values, would be required.

### Summary

According to the present invention, there is provided a method of compiling a computer program according to claim 1.

In a further aspect, there is provided a computer program product comprising instructions which, when executed by a computer, cause the computer to compile program code in accordance with the steps of the method of claim 1.

Embodiments enable compile time approximation of parametric functions using LUTs that are computed on-the-fly during compilation.

Particular embodiments allow compilers to support parametric non-linear activation functions with LUT approximations.

Particular embodiments enable fusion of connected scalar operators into a single joint operator which can be efficiently (in terms of execution cycles) approximated using a LUT.

### Brief Description of the Drawings

Embodiments of the invention will now be described, by way of example, with reference to the accompanying drawings, in which:
Figure 1 illustrates schematically a compiler according to an embodiment of the present invention;
Figure 2 illustrates a multi-operator function which can be approximated with a LUT according to an embodiment of the invention; and
Figure 3 illustrates a method performed by a compiler according to an embodiment of the present invention.

### Description of the Embodiments

In a piecewise linear LUT implementation of a function with a single input x, the LUT comprises data defining a set of linear intervals for x. A particular input value determines which interval is required and the LUT data for the interval is employed to return a result for the function.

More formally, a function *f*: [*x*₀*, x_{N}*) → *R* a (non-linear) function can be approximated using *N* linear functions defined on the intervals: [*x*₀*, x*₁), [*x*₁, *x*₂) , ... , [*x*_{*N*-1}, *x_{N}*) as follows: $y \left(x\right) = \left\{\begin{matrix}{b}_{0} + {a}_{0} ⋅ x if x ∈ \left[{x}_{0}, {x}_{1}\right) \\ {b}_{1} + {a}_{1} ⋅ x if x ∈ \left[{x}_{1}, {x}_{2}\right) \\ … \\ {b}_{N - 1} + {a}_{N - 1} ⋅ x if x ∈ \left[{x}_{N - 1}, {x}_{N}\right)\end{matrix}\right.$ where, *aₖ, bₖ* with *k* ∈ {0, 1, *...,N* - 1} are referred to as slopes and intercepts respectively, while *x*₀ *< x₁ <* ··· *< x_{N}* are known as breakpoints.

In a Continuous Piecewise Linear Approximation (CPWL), continuity between intervals is enforced, so that *b*_{*i*-1} *+ a*_{*i-*1} ** xᵢ = bᵢ + aᵢ * xᵢ for all i =* 1 ... *N -* 1. (CPWL is typical of non-linear activation functions used in neural networks.)

The number of breakpoints *N* + 1 can be fixed or variable. The breakpoints *xᵢ* in turn can have predetermined values or can be variable. In one example, 16 segments are used to approximate activation functions with breakpoint values as follows: $\left\{-inf,-16,-8,-4,-2,-1,-0.5,-0.25, 0, 0.25, 0.5, 1, 2, 4, 8, 16,+inf\right\}$

Therefore, to approximate a given function with a LUT, {*aₖ, bₖ*} need to be estimated where breakpoints are fixed and {*aₖ, bₖ, xₖ*} where breakpoints are variable.

There are various off-the-shelf solvers available for estimating {*aₖ, bₖ*} or {*aₖ, bₖ, xₖ*} data sets best approximating a given function including least square solvers such as Pytorch lstsq.

Other exemplary techniques include "Flex-SFU: Accelerating DNN Activation Functions by Non-Uniform Piecewise Approximation", Enrico Reggiani, Renzo Andri, Lukas Cavigelli, https://arxiv.org/pdf/2305.04546, May 2023 which discloses methods for approximating non-linear functions using LUTs, but does not mention how these would be integrated into a compiler.

In any case, while the above refers to LUT data for PWL approximation, it will be appreciated that in variants of the embodiment, LUT data can be employed for other approximations such as polynomial or spline approximation.

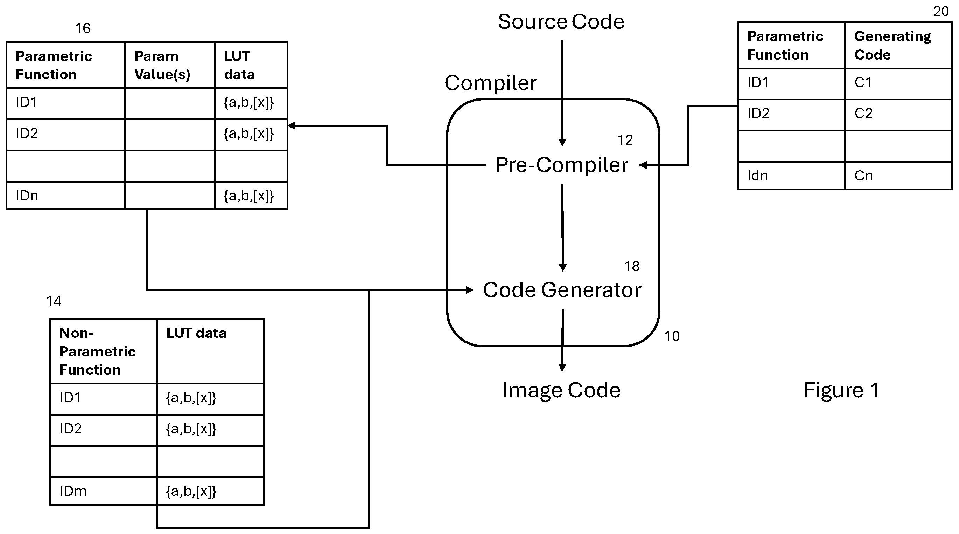

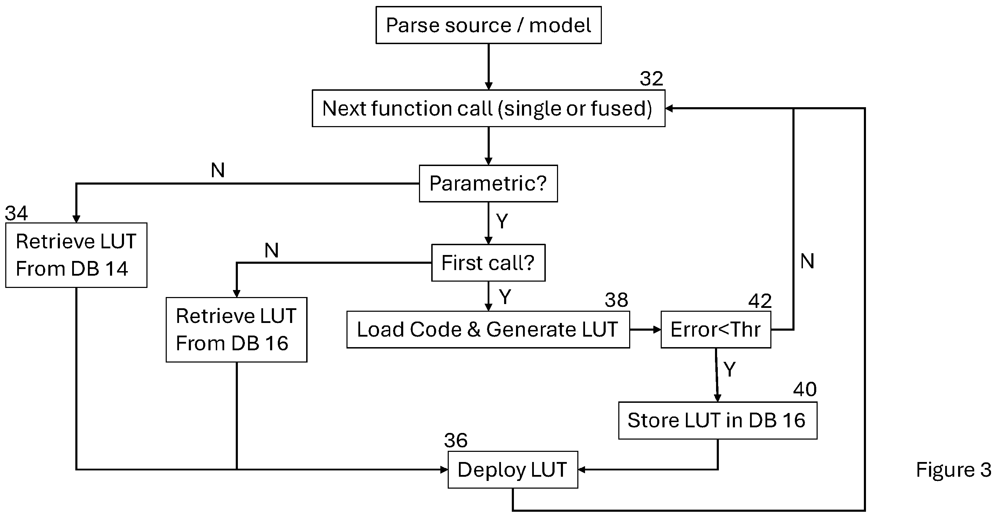

Referring now to Figure 1 which illustrates an exemplary compiler 10 according to the present invention and figure 3 which illustrates a method performed by the compiler 10 (or a pre-compiler 12 component of the compiler 10). As the compiler traverses a piece of source code, it identifies function calls which may be implemented in compiled code employing LUTs, step 32.

Where such function calls are non-parametric, it can be useful for the compiler to have pre-stored LUTs which can be deployed, steps 34, 36. In the present example, the LUT data for such functions with identifiers ID1...IDm are stored in a database 14. However, in embodiments of the present invention, responsive to the compiler first encountering a parametric function call with a given set of parameter value(s), it generates the LUT for the function in accordance with those parameter value(s) on-the-fly and then stores this data in a database 16 for use in compiling the code for the particular program as described above.

As indicated, the analysis of the source code can be performed by a pre-compiler 12 which parses source code in order to identify functions and to generate LUT data before a code generating portion 18 of the compiler runs subsequently in order to generate executable or image code. Alternatively, this analysis can be performed during the code generating phase.

In one embodiment, the compiler (or pre-compiler) is endowed with a plugin architecture which contains a registry (dictionary) 20 with the names or identifiers of activation functions and their corresponding LUT generating code - in this case parametric functions ID1...IDm with associated code C1...Cm stored in a registry 20. The first time the compiler (or pre-compiler) encounters a parametric activation function with a given set of parameter value(s), it loads its associated LUT generating code and uses this to generate the LUT data on-the-fly before storing this in database 16, steps 38, 40.

In one embodiment, the pre-compiler or the LUT generating code itself tests if an approximation error is below a predefined threshold, e.g. if the total difference between the LUT approximation and the activation function value across a required range is less than a threshold, step 42. If so, the activation function can be replaced by the LUT approximation which is then stored in database 16 - otherwise conventional executable commands are employed in the executable or image code for the program.

Using a plug-in structure for LUT generating code enables an external user, e.g. a neural network designer, to augment the registry 20 by adding new activation functions along with their LUT generating code. As long as the function can be found in the registry 20, then the compiler (or pre-compiler) can call the LUT generating code for the function in order to populate the LUT database 16 with the data for that function.

Once any LUT approximation is computed for given parameter value(s) and stored, if the same activation function with the same parameter value(s) is encountered within the same source code, the code generator 18 can just reuse the LUT data already cached in the database 16.

Nonetheless, a single parametric activation function used with different parameter value(s) will result in a set of LUTs, each with different {*aₖ, bₖ, xₖ*} for a given set of parameter value(s).

Note that in some embodiments, parametric function LUT database 16 can be tied to a piece of source code or in alternative embodiments, parametric function LUT database 16 can be common to the compiler. In any case, non-parametric function LUT database 14 is generally common to the compiler.

In a further embodiment, the above described on-the-fly LUT approximation can be applied to fuse a multiple-operator function into a single operator which can be approximated with a LUT.

For example, a scaled shifted sigmoid function is defined as: $σ \left(x; α,β\right) = \frac{1}{1 + {e}^{- \left(αx β\right)}}$

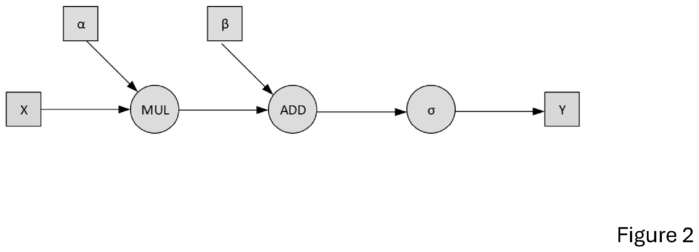

The multi-operation computational sequence for this function is shown in Figure 2. In this case, a typical compiler would generate code for the 3 operators: MUL, ADD, LUT (for σ).

However, it can be seen that computational sequence of Figure 2 contains only scalar operators and therefore these can be fused and approximated with an LUT.

As such, as well as being able to identify single operation function calls which can be approximated with a LUT, embodiments of the present compiler can be programmed to identify sequences of successive operands with a given input and to replace these with a LUT approximation.

As will be appreciated, this can involve having the pre-compiler identify more than a single token in source code as corresponding to a function name of a parametric function, but in any case, the principle is as before, with LUT generating code for the multi-operator function being stored in registry 20 as before.

Note that this fusion can also be applied to non-parametric multi-operator functions for example, where the function Silu(x) is represented in source code by successive operations x * sigmoid(x), the above fusion can be performed.

In any case, once the operands are fused, execution only requires a LUT type operation, hence it is significantly more efficient to execute.

For the purposes of explanation, the embodiment has been described in terms of functions only having a single input x. However, it will be appreciated that the embodiments can be extended to include multi-dimensional tables for functions which have more than 1 input variable.

## Claims

1. A method of compiling a computer program comprising:
analysing source code for a program to identify one or more function calls for a parametric function;
for a first instance of a given parametric function call with a given set of parameter values, executing an associated generator for producing look-up table data for the combination of function and parameter values and at least temporarily storing said look-up table data; and
responsive to a code generator identifying a function call for a parametric function with a given set of parameter values, retrieving stored look-up table data for said parametric function and parameter values and employing said look-up table data in compiled code for said program in order to execute a look-up table approximation of said function at program run-time.

2. The method according to claim 1 wherein said approximation is a piecewise linear approximation.

3. The method according to claim 1 wherein said approximation is a continuous piecewise linear approximation.

4. The method according to claim 1 wherein said function is an activation function for a neural network.

5. The method according to claim 1 including performing said executing step in a pre-compiling phase.

6. The method according to claim 1 including performing said executing step during a code generating phase.

7. The method according to claim 1 wherein said analysing comprises identifying one or more sequences of operators forming a function which can be approximated with look-up table data.

8. The method according to claim 7 wherein said analysing further comprises identifying one or more sequences of operators forming a non-parametric function which can be approximated with look-up table data.

9. The method according to claim 8 comprising: responsive to a code generator identifying a subsequent function call for a parametric function with a given set of parameter values, retrieving stored look-up table data for said parametric function and employing said look-up table data in compiled code for said program in order to execute a look-up table approximation of said function at run-time.

10. A computer program product comprising instructions which, when executed by a computer, cause the computer to compile program code in accordance with the steps of the method of claim 1.

## Amended claims

### Amended claims in accordance with Rule 137(2) EPC.

1. A computer-implemented method of compiling a computer program comprising:
analysing source code for a program to identify one or more function calls for a parametric function;
for a first instance of a given parametric function call with a given set of parameter values, executing (38) an associated generator for producing look-up table data for the combination of function and parameter values and at least temporarily storing (40) said look-up table data; and
responsive to a code generator identifying a function call for a parametric function with a given set of parameter values, retrieving stored look-up table data for said parametric function and parameter values and employing (36) said look-up table data in compiled code for said program in order to execute a look-up table approximation of said function at program run-time.

2. The method according to claim 1 wherein said approximation is a piecewise linear approximation.

3. The method according to claim 1 wherein said approximation is a continuous piecewise linear approximation.

4. The method according to claim 1 wherein said function is an activation function for a neural network.

5. The method according to claim 1 including performing said executing step in a pre-compiling phase.

6. The method according to claim 1 including performing said executing step during a code generating phase.

7. The method according to claim 1 wherein said analysing comprises identifying one or more sequences of operators forming a function which can be approximated with look-up table data.

8. The method according to claim 7 wherein said analysing further comprises identifying one or more sequences of operators forming a non-parametric function which can be approximated with look-up table data.

9. The method according to claim 8 comprising: responsive to a code generator identifying a subsequent function call for a parametric function with a given set of parameter values, retrieving stored look-up table data for said parametric function and employing (36) said look-up table data in compiled code for said program in order to execute a look-up table approximation of said function at run-time.

10. A computer program product comprising instructions which, when executed by a computer, cause the computer to compile program code in accordance with the steps of the method of claim 1.
